# EUROPEAN PATENT SPECIFICATION

(11) **EP 3 230 010 B1**
(45) Date of publication and mention of the grant of the patent: **27.01.2021**
(21) Application number: 15754136.8
(22) Date of filing: 11.08.2015
(51) Int. Cl.: B25B 21/00, B25B 23/00, B25F 5/00

(54) **POWER TOOL WITH TELESCOPIC OUTPUT SHAFT**
ELEKTROWERKZEUG MIT TELESKOPISCHER AUSGANGSWELLE
OUTIL ÉLECTRIQUE AYANT ARBRE DE SORTIE TÉLESCOPIQUE

(30) Priority: 10.12.2014 SE 1451505
(43) Date of publication of application: 18.10.2017
(73) Proprietor: Atlas Copco Industrial Technique AB, 105 23 Stockholm (SE)
(72) Inventor: JOHANSSON, Karl, Göran, S-132 37 Saltsjö-Boo (SE); GEORGSSON, Wilhelm Mattias, S-142 62 Trångsund (SE)
(74) Representative: Tholin, Thomas
(86) International application number: PCT/EP2015/068446
(87) International publication number: WO 2016/091405

(56) References cited:
- EP-A1- 1 369 206
- WO-A2-2006/066259
- US-A1- 2011 185 864

## Description

The invention relates to a torque delivering power tool with a telescopically arranged output shaft. Specifically, the invention relates to such a tool with an improved functionality with respect to the interaction with a work piece. The invention is especially adapted to torque wrenches, i.e. power tools adapted to tighten and loosen screw joints.

### Background

An operator holding a hand held torque delivering power tool should provide a moderate axial force to the power tool, such that the tool implement of the output shaft will stay in positive contact with the work piece and apply a positive force to the operation. Generally, if the tool implement is a drill bit the axial force needs to be relatively great in order to push the drill bit through the material. If, on the other hand, the tool implement is a screw bit, the axial force should be sufficiently great so as to guarantee a good connection between the tool implement and the work piece, e.g. a bolt or screw, but at the same time it should not be so hard that the workpiece risks getting damaged.

Prior art EP 1369206, relates to an electric rotational tool with a switch system where the driving switch makes it possible to achieve driving improved control that is suited to the content of the work when the electric rotational tool is used so that the handling can be simplified, and the tightening of suitable screws can be performed more easily and safely. The tool uses a torque detection means which detects a load torque generated in the rotational tool when the work is completed, and a torque-set automatic stopping means which stops driving of the rotational tool when the load torque reaches a preset torque value. The disadvantage of such arrangements is that the contact force cannot be measures and evaluated during the tightening process.

Another publication US2011/0185864 A1, further discloses diagnostic device for diagnosing screw-tightening work by an electric driver. A pressure force detection means is provided which is composed of a pressure force sensor for sensing the pressure force occurring due to the electric driver pressing the screw, and a pressure force identification unit for identifying that the pressure force sensed by the pressure force sensor has reached a preset pressure force. The screw driving tool is suitable for determination of the applied pressure force where a rigid tightening shaft is used. The inherent problem associated with telescopic shafts where the pressure force is dependent on the position of the outgoing shaft is not provided for.

For fixed tools it is also important to provide an axial force that is within an acceptable range. For fixed tools the axial force needs to be automatically adjusted throughout a torque delivering operation, whereas it will have to be manually supervised for a handheld tool.

The invention is based on the notion that there is a need of an arrangement for a power tool by means of which it is possible to control the axial force by which the output shaft acts on a work piece, while still allowing a certain flexibility concerning the axial position of the power tool.

### Summary of the invention

An object of the invention is to provide a torque delivering power tool by means of which it is possible to control the axial pressure at which the output shaft acts on the work piece.

This object is achieved by the invention according to claim 1, which relates to a torque delivering power tool with a telescopically arranged output shaft including:
- a motor,
- a housing,
- an input shaft, which is driven by said motor,
- an output shaft, which is rotationally connected to the input shaft and axially translatable with respect to the input shaft. A sensor is arranged to monitor an axial position of the output shaft with respect to the input shaft.

By monitoring the axial compression force acting between the output shaft and the input shaft it will be possible to control the axial force so as to continuously apply an axial compression force that is within a desired range.

The output shaft is telescopically arranged with respect to the input shaft between a fully extended position and a fully compressed position, wherein a resilient member having a known resilience in function of the extension is arranged to urge the output shaft towards the fully extended position, such that the extension of the output shaft continuously reflects the compression force acting between the output shaft and the input shaft.

With this feature it will be possible to uphold flexibility in the axial positioning of the tool, and still provide a axial force within a specific desired range.

Other features and advantages of the invention will be apparent from the figures and from the detailed description of the shown embodiment, and from the dependent claims.

### Short description of the drawings

In the following detailed description reference is made to the accompanying drawings, of which:
**Fig. 1** is a perspective view of a torque delivering power tool according to a specific embodiment of the invention with a telescopically arranged output shaft shown in a fully extended position;
**Fig. 2** is a sectional view of a front part of the power tool shown in a fully extended position;
**Fig. 3** is a perspective view of the torque delivering power tool shown in fig. 1 with the telescopically arranged output shaft shown in a fully compressed position; and
**Fig. 4** is a sectional view of a front part of the power tool shown in in a fully compressed position.

### Detailed description of the shown embodiment of the invention

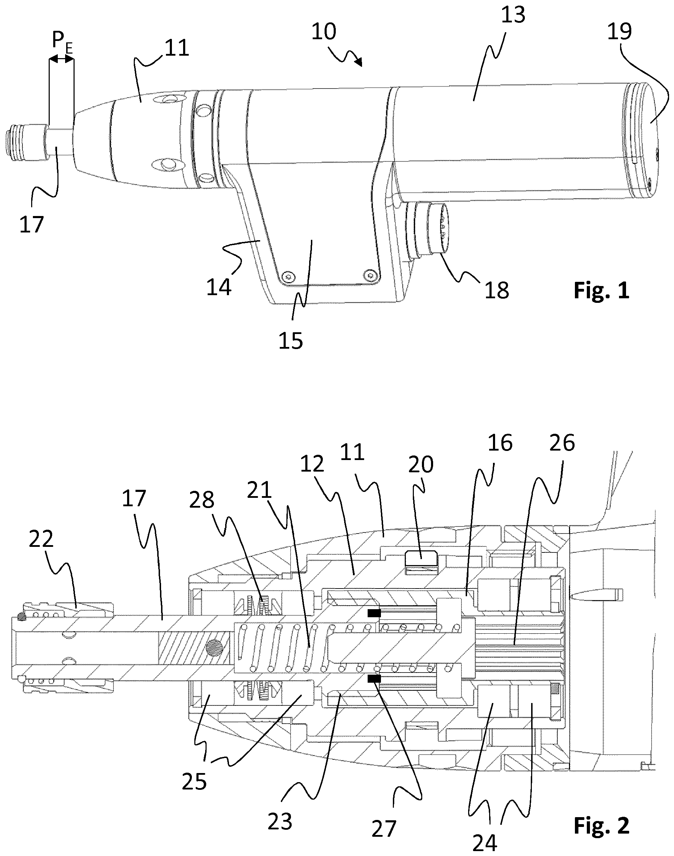

In fig. 1 a torque delivering power tool 10 according to a specific embodiment of the invention is shown. In the shown embodiment the power tool is a power wrench adapted to tighten and loosen screw joints. This is a preferred embodiment of the invention.

The power tool 10 comprises a housing that comprises several parts, including a front housing part 11, a rear housing part 13, and between these two parts a frame housing part 14 with a hollow mid portion that is covered by a casing 15. The casing 15 may be removed to grant access to electronics housed inside the space enclosed by the casing 15 and the frame housing part 14.

A motor (not shown) is arranged in the rear housing part 13 and a gear portion may be arranged inside the upper part of the frame housing part 14 and casing 15. An output shaft 17, drivingly connected to the motor is partly housed inside the front housing part 11 and extends out from the same. In figure 1 the output shaft 17 is in a fully extended position P_{E}.

At a rear side of the frame housing part 14 a connection port 18 is arranged. The bottom of the housing part 14 includes a fixation element (not shown) for fixing the power tool 10 to a robot arm or the like. The shown embodiment of the power tool is an electric torque wrench and hence the connection port 18 includes connection pins for electric power and signalling. An indication unit 19, in the form of a light source, is arranged at a rear end of the rear housing part 13 in a position where it is clearly visible to the operator.

A front part of the power tool is shown in detail in a sectional view in figure 2. As is apparent from this view the power tool further comprises an input shaft 16. The input shaft 16 is driven by the motor (not shown) via motor gear 26. The motor gear 26 may be an integral part of a motor shaft is preferable driven by the motor via at least one reduction gear such as a planetary gear. Hence, preferably, the motor gear 26 is an output end of a reduction gearing. The output shaft 17 is rotationally connected to the input shaft 16 via a splined connection 23 and is journalled in bearings 25 with respect to an inner housing part 12. The bearings 25 includes a splined inside that allows the output shaft 17 to translate axially with respect to the bearings 25 and the inner housing 12.

A sensor 20 is arranged to monitor an axial compression force acting between the output shaft 17 and the input shaft 16. In the shown embodiment the sensor 20 monitors the axial position of the output shaft 17 with respect to the input shaft 16. A movement indicator 27 such as a magnet ring is located around an inner part of the output shaft 17. The sensor 20 is arranged to monitor the movement of the movement indicator 27 so as to deduce the axial position of the output shaft 17, and hence it's axial extension with respect to the housing 11. The sensor 20 may be a hall sensor, an inductive sensor, or a capacitive sensor indicating the axial extension between the output shaft 17 and the input shaft 16. The movement indicator 27 is adapted to the type of sensor used in a manner known in the art.

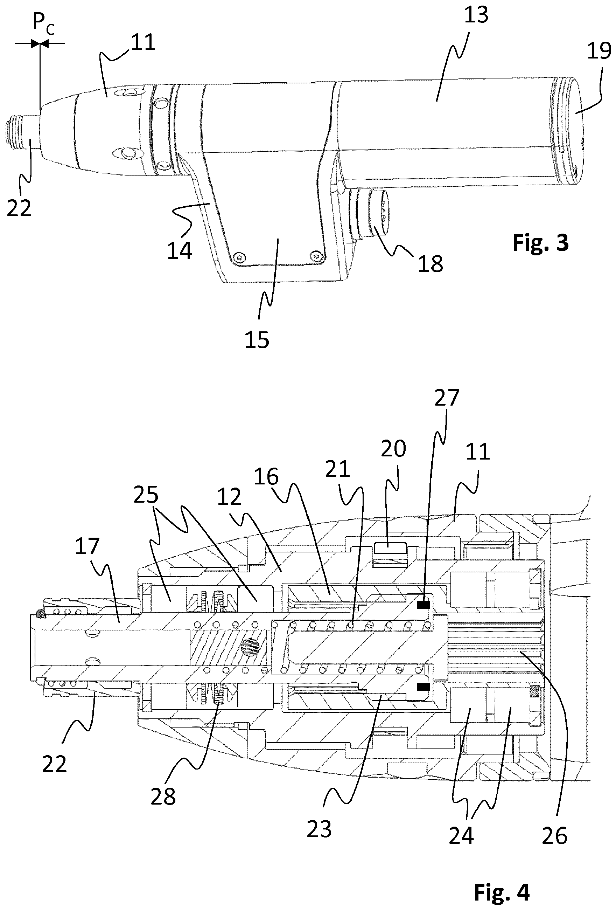

The output shaft 17 is telescopically arranged with respect to the input shaft 16 to allow axial movement of the output shaft 17 with respect to the input shaft 16 between a fully extended position PE (shown in figures 1 and 2) that corresponds to a minimum compression force and a fully compressed position P_{c} (shown in figures 3 and 4) that corresponds to a maximum compression force.

A resilient member 21, e.g. in the form of a torsional spring and having a known resilience in function of its extension, is arranged to urge the output shaft 17 towards the fully extended position PE, such that the extension of the output shaft 17 continuously reflects the compression force acting between the output shaft 17 and the input shaft 16. Thereby, it is possible to deduce the axial compression force acting between the output shaft 17 and the input shaft 16 from the axial position of the output shaft 17.

The indication unit 19 is arranged to indicate the axial compression force acting between the output shaft 17 and the input shaft 16 based on the level of extension between the shafts. As an example the indication unit may emit a red light when the axial force is outside an allowable range. Further, to differentiate a too high axial pressure from a too low axial pressure, different colours may be dedicated to different states or rapid blinking light may be dedicated to the too high torque level, and slow blinking or a continuous light may be dedicated to the too low torque level. Also, the indication means may indicate a range inside which the level of extension between the shafts 16,17 corresponds to an acceptable compression force acting between the output shaft 17 and the input shaft 16. For example, a white light may be produced for as long as the axial force is inside the acceptable range, and at a the end of a successful tightening operation the light may switch to a green light.

The indication unit may also include a sound indicator that produces a typical sound such as a high frequency beat when the axial force is higher than the allowed axial force. Further, the indication unit may be located distant from the actual power tool, e.g. integrated in a control panel used for controlling the tool. In such a control panel data of different kinds may be selectively shown and stored in order to control tightening operations.

The torque delivering power tool 10 may comprise a control unit, which either may be located in the tool itself or in the control panel. The sensor 20 may be arranged to continuously during operation transmit the monitored axial compression force acting between the output shaft 17 and the input shaft 16 to the control unit, the control unit being adapted to deliver a signal to the indication unit 19 in order to indicate the axial compression force acting between the output shaft 17 and the input shaft 16.

The control unit is adapted to alert an operator of the tool, e.g. via the indication unit 19, if the axial force exceeds a predetermined upper threshold or if it reaches below a predetermined lower threshold.

The power tool 10 may further be configured to start a specific operation only when the level of extension of the output shaft 17 with respect to the input shaft 16 is within a predetermined range. An operation may also be interrupted if the axial force reaches below or above a certain threshold.

Above, the invention has been described with reference to a specific embodiment. The invention is however not limited to this embodiment. It is obvious to a person skilled in the art that the invention comprises further embodiments within its scope of protection, which is defined by the following claims.

## Claims

1. A torque delivering power tool (10) with a telescopically arranged output shaft (17) including:
- a motor,
- a housing (11-15),
- an input shaft (16), which is driven by said motor,
- an output shaft (17), which is rotationally connected to the input shaft (16) and axially translatable with respect to the input shaft (16), wherein a sensor (20) is arranged to monitor an axial position of the output shaft (17) with respect to the input shaft (16), wherein the output shaft (17) is telescopically arranged with respect to the input shaft (16) between a fully extended position (P_{E}) and a fully compressed position (P_{C}), wherein a resilient member (21) having a known resilience in function of the extension is arranged to urge the output shaft (17) towards the fully extended position (P_{E}), such that the extension of the output shaft (17) continuously reflects the compression force acting between the output shaft (17) and the input shaft (16), **characterised in that** an indication unit (19) is arranged to indicate the axial compression force acting between the output shaft (17) and the input shaft (16) based on the level of extension between the shafts.

2. The torque delivering power tool (10) according to claim 1, wherein the indication unit (19) comprises a scale that indicates a range inside which the level of extension between the shafts (16,17) corresponds to an acceptable compression force acting between the output shaft (17) and the input shaft (16).

3. The torque delivering power tool (10) according to claim 2, wherein the torque delivering power tool (10) comprises a control unit and wherein the sensor (20), during operation, is arranged to continuously transmit the monitored axial compression force acting between the output shaft (17) and the input shaft (16) to the control unit, the control unit being adapted to deliver a signal to the indication unit (19) in order to indicate the axial compression force acting between the output shaft (17) and the input shaft (16).

4. The torque delivering power tool (10) according to claim 3, wherein the control unit is adapted to alert an operator of the tool via the indication unit (19) if the axial force exceeds a predetermined upper threshold or if it reaches below a predetermined lower threshold.

5. The torque delivering power tool (10) according to anyone of the claims 2-4, wherein the sensor (20) is a hall sensor, an inductive sensor, or a capacitive sensor indicating the axial extension between the output shaft (17) and the input shaft (16).

6. The torque delivering power tool (10) according to anyone of the preceding claims, wherein the tool is configured to start a specific operation only when the compression force acting between the output shaft (17) and the input shaft (16) is within a predetermined range.

## Patentansprüche

1. Drehmoment abgebendes Elektrowerkzeug (10) mit einer teleskopisch angeordneten Abtriebswelle (17), einschließlich:
- eines Motors,
- eines Gehäuses (11-15),
- einer Antriebswelle (16), die durch den Motor angetrieben wird,
- einer Abtriebswelle (17), die mit der Antriebswelle (16) drehbar verbunden und hinsichtlich der Antriebswelle (16) axial verlagerungsfähig ist, wobei ein Sensor (20) angeordnet ist, um eine axiale Position der Abtriebswelle (17) hinsichtlich der Antriebswelle (16) zu überwachen, wobei die Abtriebswelle (17) hinsichtlich der Antriebswelle (16) zwischen einer vollständig erstreckten Position (P_{E}) und einer vollständig zusammengedrückten Position (P_{c}) teleskopisch angeordnet ist, wobei ein elastisches Element (21), das eine bekannte Elastizität in Abhängigkeit der Erstreckung angeordnet ist, um die Abtriebswelle (17) in Richtung der vollständig erstreckten Position derart zu drücken(P_{E}),, dass die Erstreckung der Abtriebswelle (17) die Druckkraft, die zwischen der Abtriebswelle (17) und der Antriebswelle (16) wirkt, fortlaufend widerspiegelt, **dadurch gekennzeichnet, dass** eine Anzeigeeinheit (19) angeordnet ist, um die Druckkraft, die zwischen der Abtriebswelle (17) und der Antriebswelle (16) wirkt, basierend auf dem Grad der Erstreckung zwischen den Wellen anzuzeigen.

2. Drehmoment abgebendes Elektrowerkzeug (10) nach Anspruch 1, wobei die Anzeigeeinheit (19) eine Skala umfasst, die einen Bereich anzeigt, innerhalb dessen der Grad der Erstreckung zwischen den Wellen (16, 17) einer akzeptablen Druckkraft, die zwischen der Abtriebswelle (17) und der Antriebswelle (16) wirkt, entspricht.

3. Drehmoment abgebendes Elektrowerkzeug (10) nach Anspruch 2, wobei das Drehmoment abgebende Elektrowerkzeug (10) eine Steuereinheit umfasst und wobei der Sensor (20), während eines Betriebs, angeordnet ist, um die überwachte axiale Druckkraft, die zwischen dem der Abtriebswelle (17) und der Antriebswelle (16) wirkt, an die Steuereinheit fortlaufend zu übertragen, wobei die Steuereinheit angepasst ist, um ein Signal an die Anzeigeeinheit (19) abzugeben, um die axiale Druckkraft, die zwischen der Abtriebswelle (17) und der Antriebswelle (16) wirkt, anzuzeigen.

4. Drehmoment abgebendes Elektrowerkzeug (10) nach Anspruch 3, wobei die Steuereinheit angepasst ist, um einen Betreiber des Werkzeugs über die Anzeigeeinheit (19) aufmerksam zu machen, wenn die Axialkraft einen zuvor bestimmten oberen Schwellenwert überschreitet oder wenn sie einen zuvor bestimmten unteren Schwellenwert erreicht.

5. Drehmoment abgebendes Elektrowerkzeug (10) nach einem der Ansprüche 2-4, wobei der Sensor (20) ein Hallsensor, ein induktiver Sensor oder ein kapazitiver Sensor ist, der die axiale Erstreckung zwischen der Abtriebswelle (17) und der Antriebswelle (16) anzeigt.

6. Drehmoment abgebendes Elektrowerkzeug (10) nach einem der vorhergehenden Ansprüche, wobei das Werkzeug konfiguriert ist, um einen bestimmten Betrieb nur dann zu starten, wenn die Druckkraft, die zwischen der Abtriebswelle (17) und der Antriebswelle (16) wirkt, innerhalb eines zuvor bestimmten Bereichs liegt.

## Revendications

1. Outil électrique (10) fournissant un couple doté un arbre de sortie (17) agencé de manière télescopique comportant :
- un moteur,
- un logement (11-15),
- un arbre d'entrée (16), qui est entraîné par ledit moteur,
- un arbre de sortie (17), qui est relié en rotation à l'arbre d'entrée (16) et peut être translaté axialement par rapport à l'arbre d'entrée (16), un capteur (20) étant agencé pour surveiller une position axiale de l'arbre de sortie (17) par rapport à l'arbre d'entrée (16), l'arbre de sortie (17) étant agencé de manière télescopique par rapport à l'arbre d'entrée (16) entre une position complètement déployée (P_{E}) et une position complètement comprimée (P_{c}), un élément élastique (21) ayant une élasticité connue en fonction du déploiement étant agencé pour pousser l'arbre de sortie (17) vers la position complètement déployée (P_{E}), de telle sorte que le déploiement de l'arbre de sortie (17) reflète en continu la force de compression agissant entre l'arbre de sortie (17) et l'arbre d'entrée (16), **caractérisé en ce qu'**une unité d'indication (19) est agencée pour indiquer la force de compression axiale agissant entre l'arbre de sortie (17) et l'arbre d'entrée (16) en fonction du niveau de déploiement entre les arbres.

2. Outil électrique fournissant un couple (10) selon la revendication 1, dans lequel l'unité d'indication (19) comprend une échelle qui indique une plage à l'intérieur de laquelle le niveau de déploiement entre les arbres (16, 17) correspond à une force de compression acceptable agissant entre l'arbre de sortie (17) et l'arbre d'entrée (16).

3. Outil électrique fournissant un couple (10) selon la revendication 2, dans lequel l'outil électrique fournissant un couple (10) comprend une unité de commande et dans lequel le capteur (20), en cours d'utilisation, est agencé pour transmettre en continu la force de compression axiale surveillée agissant entre l'arbre de sortie (17) et l'arbre d'entrée (16) à l'unité de commande, l'unité de commande étant apte à fournir un signal à l'unité d'indication (19) afin d'indiquer la force de compression axiale agissant entre l'arbre de sortie (17) et l'arbre d'entrée (16).

4. Outil électrique fournissant un couple (10) selon la revendication 3, dans lequel l'unité de commande est apte à alerter un utilisateur de l'outil par le biais de l'unité d'indication (19) si la force axiale dépasse un seuil supérieur prédéterminé ou si elle atteint un seuil inférieur prédéterminé.

5. Outil électrique fournissant un couple (10) selon l'une quelconque des revendications 2 à 4, dans lequel le capteur (20) est un capteur à effet Hall, un capteur inductif ou un capteur capacitif indiquant le déploiement axial entre l'arbre de sortie (17) et l'arbre d'entrée (16).

6. Outil électrique fournissant un couple (10) selon l'une quelconque des revendications précédentes, dans lequel l'outil est configuré pour démarrer une opération spécifique uniquement lorsque la force de compression agissant entre l'arbre de sortie (17) et l'arbre d'entrée (16) est dans une plage prédéterminée.
